# EUROPÄISCHE PATENTSCHRIFT

(11) **EP 3 394 452 B1**
(45) Veröffentlichungstag und Bekanntmachung des Hinweises auf die Patenterteilung: **27.09.2023**
(21) Anmeldenummer: 16825345.8
(22) Anmeldetag: 14.12.2016
(51) Int. Cl.: F04D 19/04, F04D 29/60, F16L 51/03

(54) **VERBINDUNGSEINRICHTUNG**
CONNECTION DEVICE
DISPOSITIF DE RACCORDEMENT

(30) Priorität: 23.12.2015 DE 202015008803 U
(43) Veröffentlichungstag der Anmeldung: 31.10.2018
(73) Patentinhaber: Leybold GmbH, 50968 Köln (DE)
(72) Erfinder: ENGLÄNDER, Heinrich, 52441 Linnich (DE)
(74) Vertreter: dompatent von Kreisler Selting Werner - Partnerschaft von Patent- und Rechtsanwälten mbB
(86) Internationale Anmeldenummer: PCT/EP2016/080975
(87) Internationale Veröffentlichungsnummer: WO 2017/108528

(56) Entgegenhaltungen:
- EP-A1- 2 410 184
- WO-A1-2015/055985
- US-A- 1 499 050
- US-A- 3 298 680
- US-A- 4 523 612

## Beschreibung

Verbindungseinrichtung zum Verbinden eines mit einer Vakuumpumpe verbindbaren ersten Rohrendes mit einem mit einem rezipientenverbindbaren zweiten Rohrende.

Beim Verbinden einer Vakuumpumpe wie beispielsweise einer Turbomolekularpumpe mit einer zu evakuierenden Kammer besteht die Problematik, dass von der Vakuumpumpe insbesondere aufgrund der Rotordrehung Schwingungen auf die zu evakuierende Kammer übertragen werden. Diese können Prozesse oder Messungen, die in der zu evakuierenden Kammer oder einer mit der zu evakuierenden Kammer verbundenen Einrichtung durchgeführt werden, beeinträchtigen. Beispielsweise sind Elektronenmikrokope äußerst schwingungsanfällig.

Zur Dämpfung der von der Vakuumpumpe an die zu evakuierende Kammer übertragenen Schwingungen ist es bekannt zwischen einem mit der Vakuumpumpe verbindbaren Rohrende und einem mit der zu evakuierenden Kammer verbindbaren Rohrende ein Dämpfungselement vorzusehen. Dieses weist beispielsweise einen flexiblen Metallbalg auf, um die Vakuumdichtigkeit sicher zu stellen. Der Metallbalg ist beispielsweise von einem elastischen Dämpfungselement umgeben. Bei einem Ausfall der Pumpe, wie beispielsweise einem Blockieren des Rotors können von einem derartigen Dämpfungselement jedoch die Auftretenden Kräfte und Momente nicht aufgenommen bzw. nicht übertragen werden. Dies kann zu einer vollständigen Zerstörung des Dämpfungselements und damit dazu führen, dass die Pumpe sich vollständig vom Dämpfungselement bzw. der zu evakuierenden Kammer löst. Dies stellt aufgrund der hohen kinetischen Energie des schnelldrehenden Rotors ein erhebliches Gefahrenpotential dar.

Des Weiteren ist aus EP 2 410 184 ein Verbindungselement bekannt. Dieses weist zwei Rohrstücke auf, wobei eines der Rohrstücke fest mit dem mit der Vakuumpumpe verbindbaren Rohrende und das zweite Rohrstück fest mit dem mit der zu evakuierenden Kammer verbindbaren Rohrende verbunden ist. Zwischen den beiden Rohrenden sind zwei ringförmige Elastomerdichtungen vorgesehen. Diese sind von einem klammerartigen Element umgeben, das ferner einen nach innen weisenden zwischen den beiden Dichtelementen angeordneten Steg aufweist. Wenn die Vakuumpumpe nicht im Betrieb ist, werden die beiden Rohrstücke durch die Eleastomerringe auseinandergedrückt und durch die die Rohrstücke umgebende Spange mechanisch verbunden. Diese mechanische Verbindung, die auch Schwingungen übertragen würde, wird durch das erzeugte Vakuum dahingehend gelöst, dass die beiden Elastomerringe zusammengedrückt werden und hierdurch die mechanische Verbindung der beiden Rohrstücke über die Spange gelöst wird. Diese Verbindungseinrichtng weist jedoch insbesondere den Nachteil auf, dass die Lösung der mechanischen Verbindung nicht klar definiert ist. Diese hängt beispielsweise von der Höhe des erzeugten Vakuums ab. Ferner verändern sich die Elastizitäteigenschaften der Dichtringe, so dass diese regelmäßig erneuert werden müssen. Ebenso besteht die Gefahr, dass bei einer Querbelastung auf die Pumpe das Verbindungselement undicht werden kann.

Eine Verbindungseinrichtung zum Verbinden eines mit einer Vakuumpumpe verbindbaren ersten Rohrendes mit einem mit einer zu evakuierenden Kammer verbindbaren zweiten Rohrende mit den Merkmalen des Oberbegriffs des Anspruchs 1 ist aus EP 2 410 184 bekannt.

Aufgabe der Erfindung ist es, eine Verbindungseinrichtung zum Verbinden eines mit einer Vakuumpumpe verbindbaren ersten Rohrelements mit einem mit einer zu evakuierenden Kammer verbindbaren zweiten Rohrelement zu schaffen, mit dem eine gute mechanische Entkopplung bei gleichzeitig hoher Sicherheit möglich ist.

Die Lösung der Aufgabe erfolgt erfindungsgemäß durch eine Verbindungseinrichtung gemäß Anspruch 1.

Die Verbindungseinrichtung dient dazu, ein erstes mit einer Vakuumpumpe oder eine Turbomolekularpumpe verbindbaren Rohrendes mit einem zweiten Rohrende zu verbinden, wobei das zweite Rohrende mit einer zu evakuierenden Kammer verbindbar ist. Hierbei kann das erste Rohrelement auch Teil der Vakuumpumpe bzw. auch des Einlassflansches der Vakuumpumpe sein. Entsprechend kann das zweite Rohrelement auch Teil der zu evakuierenden Kammer sein. Das Verbindungselement weist erfindungsgemäß ein Rohrelement zur fluidischen Verbindung der Vakuumpumpe mit der zu evakuierenden Kammer auf. Durch das Rohrelement ist die zur Evakuierung erforderliche Vakuumverbindung geschaffen. Das Rohrelement weist damit an jeder Seite ein Verbindungselement auf, bzw. ist mit einem Verbindungselement verbunden. Die beiden Verbindungselemente dienen zum Verbinden des Rohrelements mit jeweils einem der beiden Rohrenden. Zumindest eines der beiden Verbindungselemente ist derart ausgebildet, dass es ausschließlich zur Übertragung von Momenten geeignet ist. Insbesondere können somit im Betrieb durch das Verbindungselement keine Axialkräfte, das heißt in Längsrichtung des Rohrelements verlaufende Kräfte, übertragen werden. Hierdurch ist gewährleistet, dass die Übertragung von Schwingungen von der Vakuumpumpe auf die zu evakuierende Kammer bzw. vom ersten Rohrende auf das zweite Rohrende nicht möglich ist oder zumindest stark gedämpft ist. Andererseits können von dem mindestens einen Verbindungselement Momente übertragen werden. Hierbei handelt es sich um Momente, um die Längsachse des Rohrelements die insbesondere im Crash-Fall aber auch bei Hochfahren bzw. Abbremsen der Vakuumpumpe auftreten. Hierdurch ist die entsprechende Sicherheit gewährleistet. Vorzugsweise sind beide Verbindungselemente derart ausgebildet. Erfindungsgemäß ist ein Entkopplungselement vorgesehen. Das Entkopplungselement dient zu mechanischen Entkopplung des zumindest einen ausschließlich zur Übertragung von Momenten geeigneten Verbindungselements von dem entsprechenden Rohrende. Insbesondere dient das Entkopplungselement dazu beide Verbindungselemente mechanisch zu entkoppeln, sofern beide Verbindungselemente ausschließlich zur Übertragung von Momenten geeignet sind. Hierbei ist es bevorzugt, dass das Entkopplungselement eine Axialkraft erzeugt, die der im Betrieb durch das Vakuum erzeugten Kraft entgegenwirkt. Dies hat zur Folge, dass, wenn die Vakuumpumpe nicht im Betrieb ist und wenn sich das Vakuum aufgrund eines Pumpenausfalls, Pumpen-Chrashes oder dergleichen verringert, die durch das Entkopplungselement erzeugte Axialkraft größer ist als die vom Vakuum erzeugte Gegenkraft. Hierdurch erfolgt eine mechanische Verbindung der beiden Rohrenden, so dass die auftretenden Momente gut übertragen werden können. Andererseits erfolgt im Betrieb aufgrund eines Kräftegleichgewichts zwischen der von dem Entkopplungselement erzeugten Kraft und der durch das Vakuum erzeugten Kraft eine axiale Endkopplung, so dass die Übertragung von Schwingungen zumindest stark reduziert ist.

Erfindungsgemäß weist das Entkopplungselement zumindest eine mit komprimierbarem Fluid gefüllte Fluidkammer auf. Bei dem Fluid handelt es sich insbesondere um Gas und besonders bevorzugt um Luft. Durch Einstellen des Drucks in der mindestens einen Fluidkammer kann somit die aufgebrachte Axialkraft eingestellt werden. Vorzugsweise weist das Entkopplungselement mindestens zwei Halteelemente auf. Die beiden Halteelemente sind jeweils mit einem der Rohrenden fest verbindbar. Durch die feste Verbindung zwischen den Halteelementen und den jeweiligen Rohrenden können insbesondere von dem mit der Vakuumpumpe verbindbaren Rohrende auf das eine Halteeelement und von dem anderen Halteelement auf das mit der zu evakuierenden Kammer verbindbaren Rohrende Kräfte und Momente übertragen werden. Auch ist es möglich, dass zumindest eines der beiden Halteelemente einstückig mit dem entsprechenden Rohrende ausgebildet ist oder eine nicht lösbare Verbindung erfolgt.

Vorzugsweise ist die Fluidkammer zwischen den beiden Halteelementen angeordnet. Ein Erhöhen des Drucks in der Fluidkammer bewirkt somit ein auseinanderdrücken der beiden Halteelemente.

Vorzugsweise weist das Entkopplungselement ferner ein das Rohrelement insbesondere vollständig umgebendes Außenelement auf. Das Außenelement ist hierbei vorzugsweise ringförmig ausgebildet. Vorzugsweise überdeckt das Außenelement die beiden Halteelemente in axialer Richtung, wobei das Außenelement auch mit einem der beiden Halteelemente fest verbunden oder einstückig ausgebildet sein kann. Bevorzugt ist es, dass das Außenelement mit keinem der beiden Halteelemente fest verbunden ist. Das Außenelement ist somit insbesondere zu einem der beiden Halteelemente und vorzugsweise zu beiden Halteelementen in axialer Richtung verschiebbar bzw. es ist eine entsprechende axiale Relativbewegung ermöglicht.

Vorzugsweise ist zwischen dem Außenelement und dem relativ zu diesem verschiebbaren Halteelement ein erstes Dichtelement angeordnet. Hierbei handelt es sich insbesondere um ein elastisches Dichtelement, insbesondere einen das Halteelement umgebenden Dichtring. Durch diesen werden im Wesentlichen keine Kräfte insbesondere im Wesentlichen keine Schwingungen übertragen.

Des Weiteren ist es bevorzugt, dass ein zweites Dichtelement vorgesehen ist, das zwischen dem Außenelement und dem zweiten insbesondere in axialer Richtung relativ zum Außenelement verschiebbaren Halteelement angeordnet ist. Das zweite Dichtelement ist vorzugsweise entsprechend dem ersten Dichtelement ausgebildet.

Ferner ist es bevorzugt, dass zwischen dem Rohrelement und den beiden Halteelementen jeweils ein Dichtelement angeordnet ist. Dieses ist vorzugsweise entsprechend des ersten Dichtelements ausgebildet, so dass auch durch dieses im Wesentlichen keine Kräfte oder Schwingungen übertragen werden.

In bevorzugter Ausführungsform ist die Fluidkammer von dem Außenelement, dem Rohrelement und den beiden Halteelementen begrenzt. Die Begrenzung erfolgt hierbei insbesondere durch eine Innenseite des Außenelements sowie eine gegenüberliegende Außenseite des Rohrelements. Die Halteelemente begrenzen die Fluidkammer insbesondere durch ihre Stirnseiten. Die Fluidkammer ist in bevorzugter Ausführungsform ringförmig ausgebildet und umgibt das Rohrelement insbesondere vollständig. Hierdurch kann eine gleichmäßige Kraft in axialer Richtung erzeugt werden. Eine Änderung der Kraft insbesondere in Umfangsrichtung der vorzugsweise ringförmigen Fluidkammer ist hierdurch vermieden.

Bei einer besonders bevorzugten Ausführungsform ist die Fluidkammer mit einem Zuführkanal verbunden. Der Zuführkanal dient zum Zuführen von Fluid insbesondere Gas. Vorzugsweise ist in dem Zuführkanal ein Ventil angeordnet. Hierdurch ist es auf einfach Weise möglich, den Druck in der Fluidkammer zu variieren und an eine Betriebsbedingung anzupassen. Hierdurch ist im Betrieb ein Entkoppeln realisiert, so dass im Wesentlichen keine Schwingungen von der Vakuumpumpe auf die zu evakuierende Kammer übertragen werden.

Des Weiteren ist es bevorzugt, dass das insbesondere ringförmig ausgebildete Außenelement mit dem Rohrelement über ein Stegelement fest verbunden ist. Dies kann beispielsweise zur Vereinfachung der Montage über eine Schraubverbindung erfolgen. Möglich ist es auch, das Rohrelement und das Außenelement einstückig auszubilden.

Bei einer weiteren bevorzugten Ausführungsform weist das Entkoppelelement zwei Fluidkammern auf. Diese sind in axialer Richtung insbesondere hintereinander angeordnet, so dass jede der Fluidkammer im Wesentlichen auf eines der beiden Halteelemente einwirkt. Besonders bevorzugt ist es hierbei, dass der Druck der beiden Fluidkammern getrennt voneinander einstellbar ist. Hierzu ist es vorzugsweise vorgesehen, dass je Fluidkammer ein Kanal zum Zu- und Abführen von komprimierbarem Fluid wie Gas vorgesehen und vorzugsweise in jedem Kanal ein Ventil angeordnet ist.

Das zumindest eine zum Übertragen von Momenten geeignete Übertragungselement ist in bevorzugter Ausführungsform derart ausgebildet, dass axial angeordnet Ansätze vorgesehen sind, die in Ausnehmungen ragen. Beispielsweise sind die Ansätze an dem Verbindungselement und die Ausnehmungen am Halteelement vorgesehen. In dieser Ausführungsform weisen die am Verbindungselement vorgesehenen Ansätze in die am Halteelement vorgesehenen Ausnehmungen. Ebenso könnten die Ansätze auch am Verbindungselement vorgesehen sein.

Da über das Verbindungselement auch nur im Schadensfall der Vakuumpumpe oder beim Beschleunigen oder Abbremsen der Vakuumpumpe Momente übertragen werden sollen, ist es bevorzugt, dass der Querschnitt der Ausnehmungen größer als der Querschitt der Ansätze ist. Hierdurch ist sichergestellt, dass im Normalbetrieb keine Momente und somit auch keine Schwingungen übertragen werden.

Vorzugsweise sind beide Verbindungselemente wie vorstehend beschrieben ausgebildet und vorteilhaft weitergebildet.

Durch den in der mindestens einen Fluidkammer vorgesehenen Druck erfolgt zunächst in axialer Richtung eine Verbindung zwischen den beiden Rohrenden, zwischen denen das Verbindungselement angeordnet ist. Dies erfolgt insbesondere dadurch, dass in bevorzugter Ausführungsform die Ansätze der Verbindungelemente am Boden der entsprechenden Ausnehmungen anliegen. Sobald von der Vakuumpumpe ein Vakuum erzeugt wird, entsteht hierdurch eine axiale Gegenkraft, die der durch den Druck in der mindestens einen Fluidkammer erzeugten Axialkraft entgegenwirkt. Dies bewirkt ein Lösen der mechanischen Verbindung und somit ein Entkoppeln.

Besonders bevorzugt ist es, eine Markierung vorzusehen, um auf einfache Weise von außen feststellen zu können, ob bei dem eingestellten Vakuum und dem eingestellten Druck in der mindestens einen Fluidkammer eine Entkopplung erfolgt ist. Hierzu kann an dem Außenelement und/oder zumindest einem der Halteelemente eine Markierung vorgesehen sein.

Nachfolgend wird die Erfindung anhand bevorzugter Ausführungsformen unter Bezugnahme auf die anliegenden Zeichnungen näher erläutert.

Es zeigen:
- Fig. 1: eine schematische Schnittansicht einer bevorzugten Ausführungsform einer erfindungsgemäßen Verbindungseinrichtung,
- Fig. 2: eine schematische Schnittansicht eines Verbindungselements und
- Fig. 3: eine schematische Schnittansicht einer zweiten Ausführungsform einer erfindungsgemäßen Verbindungseinrichtung.

Die Verbindungseinrichtung dient zum Verbinden eines ersten Rohrendes 10, das insbesondere mit einer Vakuumpumpe verbunden ist mit einem zweiten Rohrende 12, das insbesondere mit einer zu evakuierenden Kammer verbunden ist. Zur fluidischen Verbindung ist ein Rohrelement 14 vorgesehen. Dieses ist an seinen beiden gegenüberliegenden Enden insbesondere über nicht dargestellte Befestigungsschrauben jeweils mit einem Verbindungsring 16 verbunden. Der Ring 16 weist einen Zentrierring 18 mit Dichtung auf. Der Zentrierring 18 ist jeweils zwischen Flanschen 20 der beiden Rohrenden 10, 12 und diesen gegenüberliegenden Flanschen 22 angeordnet. Die Flansche 22 sind jeweils Teile von zwei Halteelementen 24. Die Halteelemente 24 sind jeweils ringförmig ausgebildet und umgeben das Rohrelement 14. Die beiden Halteelemente 24 sind beispielsweise über Klammern 27 jeweils mit dem ersten Rohrende 10 bzw. mit dem zweiten Rohrende 12 fest und somit starr verbunden.

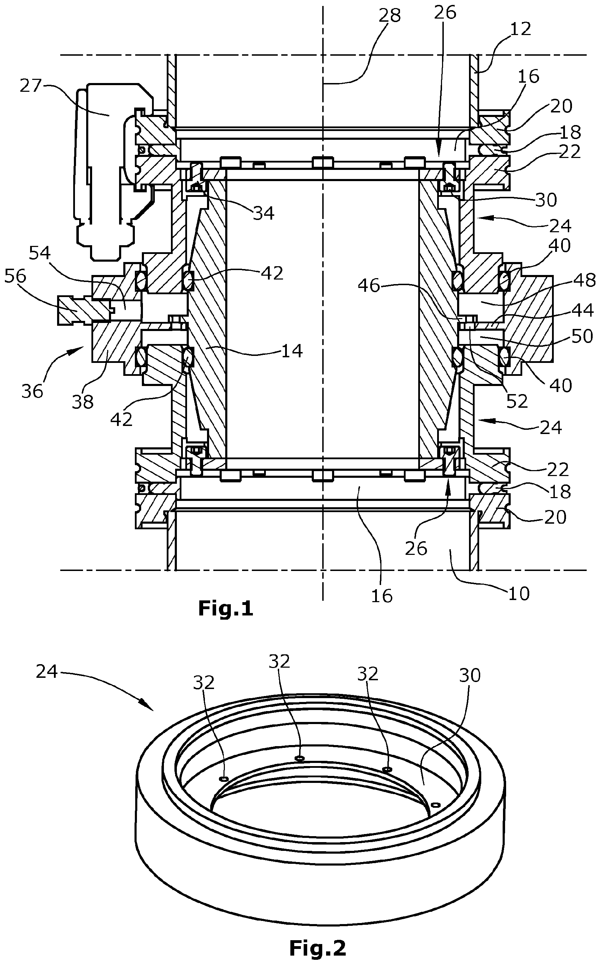

Das Rohrelement 14 ist über Verbindungselemente 26 mit den beiden Rohrelementen 10, 12 verbunden, wobei auch die beiden Halteelemente 24 Bestandteile der Verbindungselemente 26 sind. Die Verbindung erfolgt hierbei derart, dass durch die Verbindung insbesondere bei einem Ausfall der Vakuumpumpe Momente übertragen werden können. Hierbei handelt es sich um die auftretenden Momente um eine Längsachse 28. In axialer Richtung, d.h. in Richtung einer Längsachse 28 ist ein zumindest geringfügiges Verschieben des Rohrelements relativ zu den beiden Rohrenden 10, 12 bzw. relativ zu den beiden mit den Rohrenden 10, 12 fest verbundenen Halteelementen 24 möglich. Hierzu weisen die Halteelemente 24 (Fig. 2) einen radial nach innen weisenden Ansatz 30 auf. Der Ansatz 30 weist Ausnehmungen 32 auf, in die Ansätze 34 (Fig. 1) ragen. Im dargestellten Aufführungsbeispiel handelt es sich bei den Ansätzen 34 um Schraubenköpfe. Hierzu ist der Durchmesser der Ausnehmungen 32 etwas größer als der Durchmesser der Schraubenköpfe 34.

Des Weiteren weist die Verbindungseinrichtung ein Entkopplungselement 36 auf. Dies dient zur mechanischen Entkopplung der beiden Verbindungselemente 26 von den beiden Rohrenden 10,12, so dass keine Axialkräfte, d.h. Kräfte, die in Richtung der Längsachse 28 verlaufen übertragen werden können bzw. deren Übertragung stark gedämpft ist. Insofern erfolgt keine bzw. eine sehr geringe Übertragung von Schwingungen von der Vakuumpumpe auf die zu evakuierende Kammer und die mit dieser verbundenen Bauteile. Das Entkopplungselement 36 weist in dem dargestellten Ausführungsbeispiel ein ringförmig ausgebildetes Außenelement 38 auf. Das Außenelement 38 ist gegenüber den ebenfalls ringförmig ausgebildeten beiden Halteelementen 24 in axialer Richtung, d.h. in Längsrichtung 28 verschiebbar. Zwischen dem Außenelement 38 und den beiden Halteelementen 24 ist jeweils ein ringförmiges Dichtelement 40 angeordnet.

Auf einer Innenseite der beiden Halteelemente 24 ist gegebenenfalls ein ringförmiges Dichtelement 42 zur Abdichtung gegenüber dem Rohrelement 14 vorgesehen. Insbesondere ist auch in diesem Bereich eine axiale Bewegbarkeit zwischen den Halteelementen 24 und dem Rohrelement 14 gegeben.

Das Außenelement 38 des Entkopplungselements 36 ist über ein Stegelement 44 mit dem Rohrelement 14 verbunden. Hierbei handelt es sich um eine feste Verbindung, wobei das Stegelement 44 mit einem stegförmigen Ansatz 46 des Rohrelements 14 beispielsweise durch Verschrauben verbunden ist. Eine axiale Bewegung des Rohrelements 14 bewirkt somit stets auch eine axiale Bewegung des Außenelements 38.

Zur Realisierung von Axialbewegungen sind zwei Fluidkammern 48, 50 ausgebildet, die in dem in Fig. 1 dargestellten Ausführungsbeispiel über einen in den Stegen 44, 46 vorgesehenen Verbindungskanal 52 fluidisch miteinander verbunden sind. Die Fluidkammern 48, 50 sind somit durch eine Innenseite des Außenelements 38, Stirnseiten der beiden Halteelemente 24 und ein Außenseite des Rohrelements 14 begrenzt. Die Fluidkammern 48, 50 weisen einen Zuführkanal 54 auf, in dem ein Ventil 56 angeordnet ist. Über das Ventil 56 kann somit den beiden Fluidkammern 48, 50 ein Fluid, insbesondere Druckluft zu- oder abgeführt werden.

Zur axialen Entkopplung der beiden Rohrenden 10, 12 und somit zur Vermeidung und insbesondere Verringerung der Übertragung von Schwingungen ist es mit Hilfe der erfindungsgemäßen Verbindungseinrichtung möglich in den Fluidkammern 48, 50 Druck aufzubauen. Dies führt zu einem Auseinanderdrücken der beiden einander gegenüber liegenden ringförmigen Halteelemente 24. Vor Inbetriebnahme der Vakuumpumpe führt dies zu einer axialen Verbindung zwischen den beiden Rohrenden 10, 12, da die Ansätze bzw. Schraubenköpfe 34 axial jeweils am Boden der Ausnehmungen 32 anliegen. Im Betrieb wird durch die Vakuumpumpe in dem Rohrelement 14 und zusätzlich auch in den beiden Rohrenden 10, 12 ein Vakuum erzeugt. Hierdurch entsteht eine Gegenkraft. Diese bewirkt bei einem entsprechenden Kräfteverhältnis, dass die Ansätze 34 nicht mehr am Bodenbereich der Ausnehmungen 32 anliegen.

Um eine sichere Entkopplung zu gewährleisten, muss somit der Druck in den Fluidkammern 48, 50 auf das Vakuum angepasst werden. Dies ist erfindungsgemäß auf einfache Weise durch Zu- oder Abführen von Druckluft durch den Zuführkanal 54 möglich.

Des Weiteren ist es bevorzugt, dass an dem Außenring 38 und/oder einem der beiden Halteelemente 24 eine Markierung vorgesehen ist, so dass die Lage des Außenrings 38 und somit auch des Rohrelements 14 relativ zu den Halteelementen 24 auf einfache Weise ablesbar ist. Hierdurch kann auf einfache Weise der erforderliche Druck in den Fluidkammern 48, 50 ermittelt werden, um eine axiale Entkopplung zu gewährleisten.

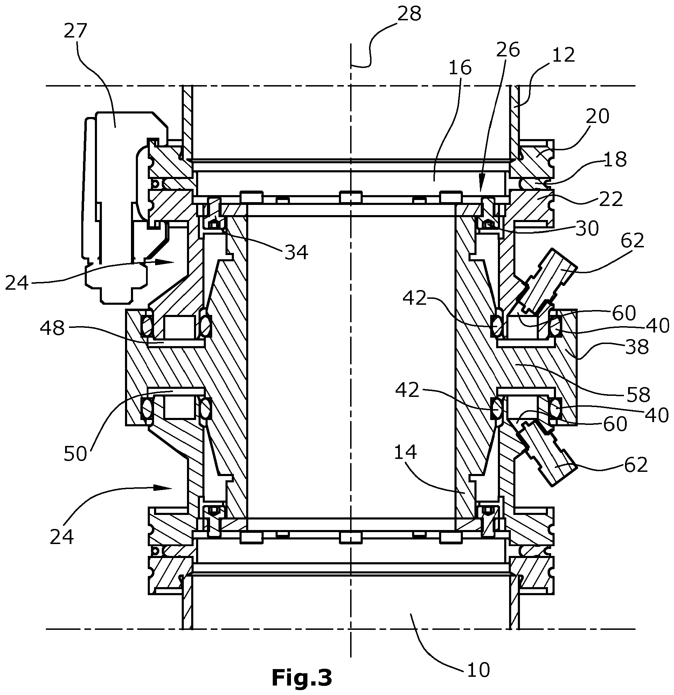

Bei der in Fig. 3 dargestellten Ausführungsform sind ähnliche und identische Bauteile mit denselben Bezugszeichen gekennzeichnet.

Der wesentliche Unterschied besteht darin, dass der Außenring 38 mit dem Rohrelement 14 einstückig ausgebildet ist. Die Verbindung erfolgt im dargestellten Ausführungsbeispiel über einen massiv ausgebildeten Steg 58. Der Steg 58 weist im dargestellten Ausführungsbeispiel auch keine Bohrungen zur Verbindung der beiden Fluidkammern 48, 50 auf. Vielmehr ist je Fluidkammer 48, 50 jeweils ein Zuführkanal 60 vorgesehen, in dem jeweils ein Ventil 62 angeordnet ist. Hierdurch ist es möglich den Druck in den beiden Fluidkammern 48, 50 unabhängig voneinander einzustellen, so dass eine Feinjustage möglich ist. Insofern ist es auch bei dieser Ausführungsform bevorzugt, dass zwei Markierungen vorgesehen sind, wobei eine Markierung die relative Lage zwischen dem Außenelement 38 und einem in Fig. 1 oberen Halteelement 24 und die zweite Markierung die relative Lage zu dem in Fig. 3 unteren Halteelement 24 veranschaulicht.

## Patentansprüche

1. Verbindungseinrichtung zum Verbinden eines mit einer Vakuumpumpe verbindbaren ersten Rohrendes (10) mit einem mit einer zu evakuierenden Kammer verbindbaren zweiten Rohrende (12), mit
einem Rohrelement (14) zur fluidischen Verbindung der Vakuumpumpe mit der zu evakuierenden Kammer,
wobei das Rohrelement (14) an jeder Seite ein Verbindungselement (26) zum Verbinden mit jeweils einem der Rohrenden (10, 12) aufweist,
wobei zumindest eines der beiden Verbindungselemente (26) im Betrieb ausschließlich zur Übertragung von Momenten geeignet ist und
einem Entkopplungselement (36) zur mechanischen axialen Entkopplung des zumindest einen ausschließlich zur Übertragung von Momenten geeigneten Verbindungselements (26) von dem entsprechenden Rohrende (10), (12)
**dadurch gekennzeichnet, dass**
das Entkopplungselement (36) zumindest eine mit komprimierbarem Fluid insbesondere Gas gefüllte Fluidkammer (48, 50) aufweist.

2. Verbindungseinrichtung nach Anspruch 1, **dadurch gekennzeichnet, dass** die von dem Entkopplungselement (36) erzeugte Kraft insbesondere die erzeugte Axialkraft einstellbar ist.

3. Verbindungseinrichtung nach Anspruch 2, **dadurch gekennzeichnet, dass** die Einstellung der Axialkraft durch Druckänderung in der Fluidkammer (48, 50) erfolgt.

4. Verbindungseinrichtung nach einem der Ansprüche 1 bis 3, **dadurch gekennzeichnet, dass** beide Verbindungselemente (26) ausschließlich zur Übertragung von Momenten geeignet sind.

5. Verbindungseinrichtung nach einem der Ansprüche 1 bis 4, **dadurch gekennzeichnet, dass** das Entkopplungselement (36) zwei Halteelemente (24) aufweist, die fest mit jeweils einem der Rohrenden (10, 12) verbindbar sind, wobei die Fluidkammer (48, 50) vorzugsweise zwischen den beiden Halteelementen (24) angeordnet ist.

6. Verbindungseinrichtung nach einem der Ansprüche 1 bis 5, **dadurch gekennzeichnet, dass** das Entkopplungselement (36) ein das Rohrelement (14) insbesondere vollständig umgebendes Außenelement (38) aufweist.

7. Verbindungseinrichtung nach Anspruch 6, **dadurch gekennzeichnet, dass** das Außenelement (38) relativ zu zumindest einem insbesondere beiden Halteelementen (24) axial verschiebbar ist.

8. Verbindungseinrichtung nach einem der Ansprüche 6 oder 7, **gekennzeichnet durch** ein zwischen dem Außenelement (38) und dem relativ zu diesem verschiebbaren Halteelement (24) angeordneten ersten Dichtelement (40) und vorzugsweise durch ein zweites Dichtelement (40), dass zwischen dem Außenelement (38) und dem zweiten insbesondere ebenfalls axial verschiebbaren Halteelement (24) angeordnet ist.

9. Verbindungseinrichtung nach einem der Ansprüche 5 bis 8, **dadurch gekennzeichnet, dass** zwischen dem Rohrelement (14) und den beiden Halteelementen (24) jeweils ein Dichtelement (42) angeordnet ist.

10. Verbindungseinrichtung nach einem der Ansprüche 6 bis 9, **dadurch gekennzeichnet, dass** die mindestens eine Fluidkammer (48, 50) von dem Außenelement (38), dem Rohrelement (14) und den beiden Halteelementen (24) begrenzt ist.

11. Verbindungseinrichtung nach einem der Ansprüche 1 bis 10, **dadurch gekennzeichnet, dass** die mindestens eine Fluidkammer (48, 50) das Rohrelement (14) ringförmig umgibt.

12. Verbindungseinrichtung nach einem der Ansprüche 1 bis 11, **dadurch gekennzeichnet, dass** die mindestens eine Fluidkammer (48, 50) einen Zuführkanal (54, 60) aufweist, in dem insbesondere ein Ventil (56, 62) angeordnet ist.

13. Verbindungseinrichtung nach einem der Ansprüche 6 bis 12, **dadurch gekennzeichnet, dass** das Außenelement (38) mit dem Rohrelement (14), insbesondere über ein Stegelement (44, 58) fest verbunden, insbesondere einstückig ausgebildet ist.

14. Verbindungseinrichtung nach einem der Ansprüche 1 bis 13, **dadurch gekennzeichnet, dass** das Entkoppelelement (36) zwei Fluidkammern (48, 50) aufweist, deren Druck vorzugsweise getrennt voneinander einstellbar ist.

15. Verbindungseinrichtung nach einem der Ansprüche 1 bis 14, **dadurch gekennzeichnet, dass** das zumindest eine ausschließlich zur Übertragung von Momenten geeignete Verbindungselement (26) insbesondere axial angeordnete Ansätze (34) aufweist, die in Ausnehmungen (32) ragen wobei vorzugsweise der Querschnitt der Ausnehmungen (32) größer als der Querschnitt der Ansätze (34) ist, so dass im Normalbetrieb keine Momente übertragen werden.

16. Verbindungseinrichtung nach einem der Ansprüche 6 bis 15, **dadurch gekennzeichnet, dass** das Außenelement und/oder zumindest eines der Halteelemente (24) eine Markierung aufweist, um im Betrieb die mechanische Entkopplung anzuzeigen.

## Claims

1. A connection device for connecting a first tube end (10) adapted to be connected to a vacuum pump to a second tube end (12) adapted to be connected to a chamber to be evacuated, comprising
a tube element (14) for fluidically connecting said vacuum pump to said chamber to be evacuated,
wherein said tube element (14) comprises a connection element (26) on each side for connection to a respective one of said tube ends (10, 12),
wherein, in operation, at least one of said two connection elements (26) is exclusively suitable for transmitting torques, and
a decoupling element (36) for the mechanical axial decoupling of said at least one connection element (26), which is exclusively suitable for transmitting torques, from said corresponding tube end (10, 12).
**characterized in that**
the decoupling element (36) comprises at least one fluid chamber (48, 50) filled with a compressible fluid, in particular gas.

2. The connection device according to claim 1, **characterized in that** the force generated by the decoupling element (36), in particular the generated axial force, is adjustable.

3. The connection device according to claim 2, **characterized in that** the adjustment of the axial force is carried out by changing the pressure in the fluid chamber (48, 50).

4. The connection device according to any one of claims 1 to 3, **characterized in that** the two connection elements (26) are exclusively suitable for transmitting torques.

5. The connection device according to any one of claims 1 to 4, **characterized in that** the decoupling element (36) comprises two holding elements (24) which are adapted to be fixedly connected to a respective one of the tube ends (10, 12), wherein the fluid chamber (48, 50) is preferably arranged between the two holding elements (24).

6. The connection device according to any one of claims 1 to 5, **characterized in that** the decoupling element (36) comprises an outer element (38) in particular completely surrounding the tube element (14).

7. The connection device according to claim 6, **characterized in that** the outer element (38) is adapted to be axially displaced relative to at least one, in particular both holding elements (24).

8. The connection device according to any one of claims 6 or 7, **characterized by** a first sealing element (40) arranged between the outer element (38) and the holding element (24) adapted to be displaced relative thereto and preferably by a second sealing element (40) which is arranged between the outer element (38) and the second holding element (24) which is in particular also adapted to be axially displaced.

9. The connection device according to any one of claims 5 to 8, **characterized in that** between the tube element (14) and the two holding elements (24) a respective sealing element (42) is arranged.

10. The connection device according to any one of claims 6 to 9, **characterized in that** the at least one fluid chamber (48, 50) is delimited by the outer element (38), the tube element (14) and the two holding elements (24).

11. The connection device according to any one of claims 1 to 10, **characterized in that** the at least one fluid chamber (48, 50) annularly surrounds the tube element (14).

12. The connection device according to any one of claims 1 to 11, **characterized in that** the at least one fluid chamber (48, 50) comprises a supply duct (54, 60) in which in particular a valve (56, 62) is arranged.

13. The connection device according to any one of claims 6 to 12, **characterized in that** the outer element (38) is fixedly connected, in particular integrally formed with the tube element (14) in particular via a web element (44, 58).

14. The connection device according to any one of claims 1 to 13, **characterized in that** the decoupling element (36) comprises two fluid chambers (48, 50) whose pressures are preferably adapted to be adjusted separately from each other.

15. The connection device according to any one of claims 1 to 14, **characterized in that** the at least one connection element (26) exclusively suitable for transmission of torques comprises in particular axially arranged projections (34) which extend into recesses (32), the cross-section of the recesses (32) being larger than the cross-section of the projections (34) such that no torques are transmitted during normal operation.

16. The connection device according to any one of claims 6 to 15, **characterized in that** the outer element and/or at least one of the holding elements (24) comprise a marking for indicating the mechanical decoupling during operation.

## Revendications

1. Dispositif de liaison permettant de relier une première extrémité de tuyau (10), pouvant être reliée à une pompe à vide, à une seconde extrémité de tuyau (12) pouvant être reliée à une chambre au sein de laquelle le vide doit être créé, comprenant
un élément tubulaire (14) permettant de relier fluidiquement la pompe à vide et la chambre au sein de laquelle le vide doit être créé,
dans lequel l'élément tubulaire (14) présente de chaque côté un élément de liaison (26) à relier respectivement à une des extrémités de tuyau (10, 12),
dans lequel, en cours de fonctionnement, au moins un des deux éléments de liaison (26) est approprié exclusivement pour la transmission de couples et
un élément de désaccouplement (36) permettant de désaccoupler axialement de manière mécanique le au moins un élément de liaison (26) approprié exclusivement pour la transmission de couples et l'extrémité de tuyau (10, 12) correspondante,
**caractérisé en ce que**
l'élément de désaccouplement (36) présente au moins une chambre à fluide (48, 50) remplie de fluide compressible, en particulier de gaz.

2. Dispositif de liaison selon la revendication 1, **caractérisé en ce que** la force générée par l'élément de désaccouplement (36), en particulier la force axiale générée, peut être ajustée.

3. Dispositif de liaison selon la revendication 2, **caractérisé en ce que** l'ajustement de la force axiale intervient grâce à une modification de pression dans la chambre à fluide (48, 50).

4. Dispositif de liaison selon l'une quelconque des revendications 1 à 3, **caractérisé en ce que** les deux éléments de liaison (26) sont appropriés exclusivement pour la transmission de couples.

5. Dispositif de liaison selon l'une quelconque des revendications 1 à 4, **caractérisé en ce que** l'élément de désaccouplement (36) présente deux éléments de retenue (24) qui peuvent être reliés de manière fixe à respectivement une des extrémités de tube (10, 12), dans lequel la chambre à fluide (48, 50) est de manière préférée agencée entre les deux éléments de retenue (24).

6. Dispositif de liaison selon l'une quelconque des revendications 1 à 5, **caractérisé en ce que** l'élément de désaccouplement (36) présente un élément extérieur (38) entourant en particulier complètement l'élément tubulaire (14).

7. Dispositif de liaison selon la revendication 6, **caractérisé en ce que** l'élément extérieur (38) peut coulisser axialement par rapport à au moins un, en particulier par rapport aux deux, élément(s) de retenue (24).

8. Dispositif de liaison selon l'une quelconque des revendications 6 ou 7, **caractérisé par** un premier élément d'étanchéité (40) agencé entre l'élément extérieur (38) et l'élément de retenue (24) pouvant coulisser par rapport à celui-ci, et de manière préférée par un second élément d'étanchéité (40) agencé entre l'élément extérieur (38) et le second élément de retenue (24) pouvant en particulier également coulisser axialement.

9. Dispositif de liaison selon l'une quelconque des revendications 5 à 8, **caractérisé en ce que** respectivement un élément d'étanchéité (42) est agencé entre l'élément tubulaire (14) et les deux éléments de retenue (24).

10. Dispositif de liaison selon l'une quelconque des revendications 6 à 9, **caractérisé en ce que** la au moins une chambre à fluide (48, 50) est délimitée par l'élément extérieur (38), l'élément tubulaire (14) et les deux éléments de retenue (24).

11. Dispositif de liaison selon l'une quelconque des revendications 1 à 10, **caractérisé en ce que** la au moins une chambre à fluide (48, 50) entoure l'élément tubulaire (14) de manière annulaire.

12. Dispositif de liaison selon l'une quelconque des revendications 1 à 11, **caractérisé en ce que** la au moins une chambre à fluide (48, 50) présente un canal d'alimentation (54, 60) au sein duquel est en particulier agencé un clapet (56, 62).

13. Dispositif de liaison selon l'une quelconque des revendications 6 à 12, **caractérisé en ce que** l'élément extérieur (38) est relié de manière fixe à l'élément tubulaire (14), en particulier par l'intermédiaire d'un élément formant nervure (44, 58), et est en particulier réalisé en une seule pièce.

14. Dispositif de liaison selon l'une quelconque des revendications 1 à 13, **caractérisé en ce que** l'élément de désaccouplement (36) présente deux chambres à fluide (48, 50) dont la pression peut de manière préférée être ajustée séparément.

15. Dispositif de liaison selon l'une quelconque des revendications 1 à 14, **caractérisé en ce que** le au moins un élément de liaison (26) approprié exclusivement pour la transmission de couples présente des appendices (34), en particulier agencés axialement, qui rentrent dans des évidements (32), dans lequel la section transversale des évidements (32) est de manière préférée supérieure à la section transversale des appendices (34), de sorte qu'aucun couple n'est transmis en fonctionnement normal.

16. Dispositif de liaison selon l'une quelconque des revendications 6 à 15, **caractérisé en ce que** l'élément extérieur et/ou au moins un des éléments de retenue (24) présente(nt) un marquage afin d'indiquer le désaccouplage mécanique en cours de fonctionnement.
